# EUROPÄISCHE PATENTANMELDUNG

(11) **EP 2 012 449 A1**
(43) Veröffentlichungstag der Anmeldung: **07.01.2009**
(21) Anmeldenummer: 07075574.9
(22) Anmeldetag: 06.07.2007
(51) Int. Cl.: H04H 20/38

(54) **System und Verfahren zum Breitstellen eines interaktiven Rundfunkprogramms**

(71) Anmelder: Technische Fachhochschule Wildau, 15745 Wildau (DE)
(72) Erfinder: Fricke, Armin, 14532 Kleinmachnow (DE); La Tendresse, Carsten, 10119 Berlin (DE); Cubasch, Simon, 10115 Berlin (DE)
(74) Vertreter: Gross, Felix

(57) **Zusammenfassung**

Die Erfindung betrifft ein Verfahren zum Bereitstellen eines interaktiven Rundfunkprogramms, bei dem zum Bereitstellen des interaktiven Rundfunkprogramms ein Audio- und Videodatenstrom generiert wird, der Audio- und Videodatenstrom an eine Mehrzahl von Empfangsgeräten unterschiedlicher Nutzer ausgestrahlt wird und die Nutzer im Rahmen des interaktiven Rundfunkprogramms durch Abgabe mindestens einer Interaktionsnachricht mit dem interaktiven Rundfunkprogramm interagieren. Erfindungsgemäß ist vorgesehen, dass eine zentrale Steuereinheit (1) den Audio- und Videodatenstrom (V) mittels einer Rendering-Einheit (12) generiert, wobei die Rendering-Einheit (12) mit einem Datenbanksystem (2) zur Generierung des Audio- und Videodatenstroms (V) zusammenwirkt, indem die Rendering-Einheit (12) in dem Datenbanksystem (2) gespeicherte, vordefinierte Audio- und Videodatenelemente (D) zu dem Audio- und Videodatenstrom (V) verknüpft, und die Rendering-Einheit (12) die mindestens eine Interaktionsnachricht (S) bei der Generierung des Audio- und Videodatenstroms (V) berücksichtigt. Die Erfindung betrifft weiterhin ein System zum Bereitstellen eines interaktiven Rundfunkprogramms. Auf diese Weise werden ein Verfahren und ein System geschaffen, mittels derer auf kostengünstige und automatische Weise interaktive Rundfunkprogramme insbesondere zur Ausstrahlung an Fernsehendgeräte oder Mobilfunkendgeräte generiert werden können.

## Beschreibung

Die Erfindung betrifft ein Verfahren zum Bereitstellen eines interaktiven Rundfunkprogramms nach dem Oberbegriff des Anspruchs 1 sowie ein System zum Bereitstellen eines interaktiven Rundfunkprogramms nach dem Oberbegriff des Anspruchs 17.

Bei einem derartigen Verfahren wird zum Bereitstellen des interaktiven Rundfunkprogramms ein Audio- und Videodatenstrom generiert und der Audio- und Videodatenstrom an eine Mehrzahl von Empfangsgeräten unterschiedlicher Nutzer ausgestrahlt. Charakteristisch beim Rundfunk, auf den sich die vorliegende Erfindung in erster Linie bezieht, ist, dass von einer zentralen Sendeeinheit ein einheitliches Programm ausgestrahlt und durch eine Vielzahl von Nutzer gleichzeitig empfangen wird. Bei dem hier vorliegenden interaktiven Rundfunkprogramm interagieren die Nutzer im Rahmen der Programmausstrahlung durch Abgabe mindestens einer Interaktionsnachricht mit dem interaktiven Rundfunkprogramm.

In der heutigen Fernsehlandschaft haben sich Quizsendungen etabliert, in deren Rahmen Nutzer zur Beantwortung einer Quizfrage aufgefordert werden, eine gebührenpflichtige Telefonnummer anzurufen, um so an der Quizsendung teilzunehmen (mit anderen Worten: mit dem Rundfunkprogramm zu interagieren). Bei derartigen Formaten befindet sich ein Moderator in einem Fernsehstudio, führt durch das Programm und stellt die Quizfragen. Die Nutzer empfangen das Programm am heimischen Fernsehempfänger und können durch Anwahl der gebührenpflichtigen Telefonnummer an dem Programm teilnehmen. Derartige Quizsendungen zeichnen sich durch niedrige Produktionskosten aus, sind in ihrer Qualität und Variabilität jedoch eingeschränkt und beschränken die Interaktion der Nutzer auf die Beantwortung von Quizfragen.

In den letzten Jahren haben sich unterschiedliche Standards für die Ausstrahlung digitaler Fernsehsignale etabliert. Hierzu gehört vor allem der DVB-T-Standard, mittels dessen über terrestrische Übertragungskanäle digitale Fernsehsignale an Fernsehempfänger ausgestrahlt werden. Daneben hat sich der so genannte DVB-H-Standard entwickelt, mittels dessen digitale Rundfunksignale terrestrisch auch an Mobilfunkendgeräte ausgestrahlt werden können. Insbesondere die Entwicklung des DVB-H-Standards schafft das Bedürfnis nach kostengünstigen, jedoch qualitativ hochwertigen Formaten, die auf terrestrischem Wege an mobile Endgeräte ausgestrahlt werden können und den Nutzern Spiele oder andere insbesondere interaktive Unterhaltungsprogramme zur Verfügung stellen.

Aufgabe der vorliegenden Erfindung ist es, ein Verfahren und ein System zu schaffen, mittels derer auf kostengünstige und automatische Weise interaktive Rundfunkprogramme insbesondere zur Ausstrahlung an Fernsehempfänger oder Mobilfunkendgeräte generiert und betrieben werden können.

Diese Aufgabe wird durch ein Verfahren mit den Merkmalen des Anspruchs 1 gelöst.

Erfindungsgemäß ist bei einem Verfahren der eingangs genannten Art vorgesehen, dass eine zentrale Steuereinheit den Audio- und Videodatenstrom mittels einer Rendering-Einheit generiert, wobei
- die Rendering-Einheit mit einem Datenbanksystem zur Generierung des Audio- und Videodatenstroms zusammenwirkt, indem die Rendering-Einheit in dem Datenbanksystem gespeicherte, vordefinierte Audio- und Videodatenelemente zu dem Audio- und Videodatenstrom verknüpft, und
- die Rendering-Einheit die mindestens eine Interaktionsnachricht bei der Generierung des Audio- und Videodatenstroms berücksichtigt.

Die vorliegende Erfindung geht von dem Grundgedanken aus, zur automatischen Generierung eines interaktiven Rundfunkprogramms eine zentrale Steuereinheit zu verwenden, die ein Audio- und Videodatenstrom erzeugt und hierzu auf vordefinierte, in einem Datenbanksystem gespeicherte Audio- und Videodatenelemente zurückgreift. Der so erzeugte Audio- und Videodatenstrom wird über eine Sendeeinheit, beispielsweise einen Fernsehkanal, an eine Vielzahl von Empfangsgeräten, beispielsweise Fernsehempfänger, unterschiedlicher Nutzer ausgestrahlt. Im Rahmen des interaktiven Rundfunkprogramms werden die Nutzer zur Interaktion durch Abgabe mindestens einer Interaktionsnachricht aufgefordert. Die Interaktionsnachrichten der unterschiedlichen Nutzer werden dann durch die zentrale Steuereinheit empfangen und bei der Generierung des weiteren Audio- und Videodatenstroms berücksichtigt.

Unter einem Rundfunkprogramm wird vorliegend ein Programm verstanden, das von einer zentralen Sendeeinheit gleichzeitig an eine Vielzahl von Nutzern ausgestrahlt und von den Nutzern parallel empfangen wird, wie dies beispielsweise bei Fernsehprogrammen der Fall ist. Zu den Empfangsgeräten können in diesem Sinne Fernsehempfänger, Mobilfunkendgeräte oder andere Empfangsgeräte gehören, die in der Lage sind, Rundfunkprogramme zu empfangen.

Die Rendering-Einheit übernimmt die Erzeugung des Audio- und Videodatenstroms, der dann einer Sendeeinheit zur Ausstrahlung an die Empfangsgeräte der Nutzer zur Verfügung gestellt wird. Der Vorgang der Erzeugung des Audio- und Videodatenstroms wird auch als Rendering bezeichnet, in dessen Rahmen aus Rohdaten - durch Anwendung geeigneter Verfahren und Algorithmen - Mediendaten generiert werden. Im Bereich der Computergrafik bezeichnet Rendering die Erzeugung eines digitalen Bildes aus einer Bildbeschreibung. Bei einer zweidimensionalen Beschreibung ist damit die Rasterung gemeint. Bei 3D-Szenen sind räumliche Objekt-Daten (i.e. die Audio- und Videodatenelemente) Teil der Bild- oder Szenenbeschreibung. Die Audio- und Videodatenelemente können als vektoriell-mathematische Beschreibung einer Szene vorliegen und werden im Rahmen des Rendering mit anderen Audio- und Videodatenelementen verknüpft und zu einem gerasterten Bild umgewandelt, das auf einem Monitor dargestellt werden kann. Die Rendering-Einheit übernimmt auch die Umrechnung der Bildschirmkoordinaten in Gerätekoordinaten, das so genannte Texturing (Erzeugung und Darstellung einer realistischen Oberflächenstruktur), das Clipping oder auch das Antialiasing. Die Software dazu wird als (3D-)Renderer bezeichnet. Teil des Rendering ist auch die Berechnung von Bildübergängen oder auch Filtern zur Verbesserung oder künstlerischen Beeinflussung der Bilder.

Mit der vorliegenden Erfindung wird eine hybride Plattform geschaffen, die an zentraler Stelle einen Audio- und Videodatenstrom erzeugt und an eine Vielzahl von Nutzern in breitbandiger Weise ausstrahlt (Hin-Kanal) und gleichzeitig Antworten der Nutzer in Form von Interaktionsnachrichten aufnimmt und zur weiteren Erzeugung des Audio- und Videodatenstroms verarbeitet (Rück-Kanal). Die Erzeugung des Rundfunkprogramms erfolgt hierbei vollkommen automatisch basierend auf vordefinierten, gespeicherten Audio- und Videodatenelementen, die im Rahmen der Erzeugung des Audio- und Videodatenstroms miteinander verknüpft und als Bild- und Tonsignal an die Nutzer ausgestrahlt werden. Unter einer hybriden Plattform in diesem Zusammenhang wird ein System verstanden, dass einen Hin-Kanal zur Aussendung eines Datenstroms an Nutzer und einen Rück-Kanal zur Interaktion der Nutzer mit dem System zur Verfügung stellt. Die hybride Plattform verwendet für den Hin-Kanal und den Rück-Kanal unterschiedliche Technologien, nämlich einerseits zum Aussenden des Audio- und Videodatenstroms eine Rundfunktechnologie, in deren Rahmen ein Signal gleichzeitig an eine Vielzahl von Nutzern gesendet wird, und zum anderen zur Interaktion eine persönliche Verbindung ("1to1"-Verbindung) eines Nutzers mit dem System beispielsweise über einen Telekommunikationskanal (z.B. Telefon, Internet oder dergleichen), über den der Nutzer mit dem System in Kontakt tritt.

Zur Erfassung der Interaktionsnachrichten der Nutzer, mit denen die Nutzer mit dem interaktiven Rundfunkprogramm interagieren, weist die zentrale Steuereinheit bevorzugt eine Telekommunikationsschnittstelle auf. Als Interaktionsnachricht können durch die Nutzer beispielsweise Anrufe getätigt oder Kurznachrichten in Form von SMS (Short Message Service) über ein Telekommunikationsendgerät, beispielsweise ein Telefon, ein Mobilfunkgerät oder einen Computer, versandt werden. Diese Interaktionsnachrichten werden vorteilhafterweise von einem Telekommunikationsnetzbetreiber empfangen, verarbeitet und an die Telekommunikationsschnittstelle der Steuereinheit weitergeleitet. Der Telekommunikationsnetzbetreiber kann beispielsweise auch die Abrechnung der Interaktion übernehmen, indem pro Anruf oder pro Kurznachricht eine Gebühr berechnet und dem Anbieter des Rundfunkprogramms gutgeschrieben wird.

Die Interaktionsnachricht kann durch eine Auswerteeinheit der Steuereinheit ausgewertet werden. Bei einer Interaktionsnachricht kann es sich hierbei inhaltlich um die Antwort auf eine Quizfrage im Multiple-Choice oder als Klartext, eine Meinungsäußerung, eine Abstimmung oder dergleichen handeln, die ein Nutzer dem System übersendet. Mit der Interaktionsnachricht nimmt der Nutzer am laufenden Rundfunkprogramm teil, interagiert somit mit dem Rundfunkprogramm und kann gegebenenfalls den Ablauf des Rundfunkprogramms beeinflussen, etwas gewinnen oder sich mit anderen Nutzern messen. Die Auswertung wird durch die Auswerteeinheit der Steuereinheit übernommen, die beispielsweise ein Auswerteergebnis sämtlicher Interaktionsnachrichten der Nutzer ermittelt und der Rendering-Einheit zur Verfügung stellt, die dieses Auswerteergebnis berücksichtigt und abhängig vom Auswerteergebnis den weiteren Audio- und Videodatenstrom erzeugt. Beispielsweise ist denkbar, dass, wenn eine Mehrzahl von Nutzern sich auf eine Interaktionsaufforderung in Form einer Frage für eine bestimmte Möglichkeit entschieden hat, der weitere Audio- und Videodatenstrom in Übereinstimmung mit der Auswahl der Mehrzahl der Nutzer generiert wird. In Abhängigkeit von den teilnehmenden Nutzern wird somit der Audio- und Videodatenstrom erzeugt und in Abhängigkeit von den Nutzern angepasst und fortgeführt. Auf diese Weise können beispielsweise interaktive, durch eine Vielzahl von Nutzern gesteuerte Spiele geschaffen werden, an denen eine Vielzahl von Nutzern gleichzeitig teilnehmen können. Gleichzeitig ist auch denkbar, dass die Interaktionsnachrichten der unterschiedlichen Nutzer getrennt voneinander ausgewertet und bewertet werden und in Abhängigkeit von der Auswertung der einzelnen Interaktionsnachrichten den einzelnen Nutzern jeweils ein Ergebnis zugeordnet wird. Die teilnehmenden Nutzer werden so auch aneinander gemessen, wobei ein Nutzer durch richtige Antworten ein besseres Ergebnis als andere Nutzer erzielen kann und so beispielsweise einen Preis gewinnen oder eine andere Bewertung oder Priorität für die Beeinflussung des weiteren Rundfunkprogramms erreichen kann. Wesentlich hierbei ist, dass das interaktive Rundfunkprogramm sowohl eine narrative Komponente, bedingt durch den von allen gemeinsam steuerbaren Ablauf des Programms, als auch eine kompetitive Komponente, bedingt durch die vergleichende Bewertung der einzelnen teilnehmenden Nutzer, aufweisen kann.

Zur Bereitstellung des interaktiven Rundfunkprogramms erzeugt die zentrale Steuereinheit einen Audio- und Videodatenstrom, der über eine Sendeeinheit an eine Vielzahl von Nutzern gleichzeitig ausgestrahlt wird. Die Generierung des Audio- und Videodatenstroms durch die Rendering-Einheit der Steuereinheit erfolgt hierbei in Echtzeit, wobei das Rundfunkprogramm, wie bei herkömmlichen Fernsehprogrammen üblich, flüchtig ist, also einmal ausgestrahlt wird und danach nicht mehr abgerufen werden kann. Die Nutzer können das Rundfunkprogramm lediglich einmalig und nur zu einem bestimmten Zeitpunkt empfangen, wobei ein Nutzer, der sein Empfangsgerät abschaltet, das Rundfunkprogramm nicht weiter empfängt und auch zu einem späteren Zeitpunkt in der Regel nicht erneut empfangen kann.

Bei dem vorliegenden interaktiven Rundfunkprogramm können jedoch zusätzlich zum in Echtzeit generierten und ausgestrahlten Audio- und Videodatenstrom vor oder während der Ausstrahlung des Audio- und Videodatenstroms Interaktionsmoduldaten an die Empfangsgeräte der Nutzer übertragen werden, die mindestens ein Interaktionsmodul für eine Interaktion der Nutzer mit dem ausgestrahlten Rundfunkprogramm definieren. Die Interaktionsmoduldaten werden hierbei getrennt vom eigentlichen Audio- und Videodatenstrom übertragen, vorteilhafter Weise bereits vor der Ausstrahlung des Audio- und Videodatenstroms und somit vor dem eigentlichen interaktiven Rundfunkprogramm. Die Interaktionsmoduldaten können beispielsweise nachts oder zu anderen Zeiten, in denen ein Empfangsgerät gerade empfangsbereit ist, übertragen werden. Vorteilhafterweise erfolgt die Übertragung der Interaktionsmoduldaten wiederholt, so dass sichergestellt ist, dass die Interaktionsmoduldaten von den Empfangsgeräten der Nutzer auch vollständig empfangen werden. Dieser Vorgang wird herkömmlicher Weise auch als "Karussellieren" bezeichnet. Im Gegensatz zum eigentlichen interaktiven Rundfunkprogramm, im Rahmen dessen der Audio- und Videodatenstrom in Echtzeit generiert und ausgestrahlt wird, ist die Übertragung der Interaktionsmoduldaten somit nicht flüchtig, sondern es wird sichergestellt, dass jeder Nutzer die erforderlichen Interaktionsmoduldaten verfügbar hat.

Unter einem Interaktionsmodul ist beispielsweise ein Modul zu verstehen, das auf dem Empfangsgerät eines Nutzers abläuft und den Nutzer zu einer Interaktion auffordert oder bei der Abgabe der Interaktion anleitet. Ein Interaktionsmodul kann beispielsweise ein Abstimmungsmodul, ein Auswahlmodul, ein Quizmodul oder ein sonstiges Modul sein, mittels dessen ein Nutzer zur Vornahme einer Handlung aufgefordert wird. Beispielsweise kann das Interaktionsmodul die Form einer wiederkehrenden Maske aufweisen, die beispielsweise vier mögliche Antworten vorgibt, von denen der Nutzer durch Abgabe einer Interaktionsnachricht, beispielsweise also durch Versenden einer Kurznachricht an eine angegebenen Telefonnummer, eine Antwort auswählen kann.

Zum Aktivieren eines oder mehrerer Interaktionsmodule kann die Rendering-Einheit zusätzlich zu dem Audio- und Videodatenstrom einen Meta-Datenstrom erzeugen, der mindestens einen Steuerbefehl zum Ausführen einer oder mehrerer Interaktionsmodule auf den Empfangsgeräten der Nutzer enthält. Der Meta-Datenstrom wird zusammen und zeitgleich mit dem Audio- und Videodatenstrom ausgestrahlt und vom Empfangsgerät eines Nutzers empfangen, das die im Meta-Datenstrom enthaltenen Meta-Daten dann auswertet und in Anhängigkeit von den Meta-Daten ein oder mehrere Interaktionsmodule ausführt. Unter Meta-Daten sind hierbei Steuerdaten zu verstehen, die beispielsweise eine Identifikationsnummer eines Interaktionsmoduls, mit einem Interaktionsmodul zu verknüpfende Daten, eine Angabe über die Zeit, zu der das Interaktionsmodul ausgeführt werden soll, oder dergleichen enthalten. Die Meta-Daten können mehrfach gesendet werden, um sicherzustellen, dass die Metadaten von einem Nutzer auch richtig empfangen werden. Die Meta-Daten werden jedoch wie der Audio- und Videodatenstrom in Echtzeit generiert und parallel zu dem Audio- und Videodatenstrom gesendet.

Wie eingangs geschildert, sind unterschiedliche Standards zur Ausstrahlung des interaktiven Rundfunkprogramms denkbar. Beispielsweise können der Audio- und Videodatenstrom sowie auch der Meta-Datenstrom im DVB-T-Standard oder DVB-H-Standard über digitale terrestrische Sendekanäle an Fernsehempfänger oder Mobilfunkendgeräte ausgestrahlt werden. Die vorgestellte Erfindung ist jedoch nicht auf diese Standards beschränkt, sondern lässt sich in allgemeiner Weise auch mit anderen Standards betreiben, wobei wesentlich ist, dass ein Sendesignal von einer zentralen Sendeeinheit breitbandig an eine Vielzahl von Nutzern gleichzeitig ausgestrahlt wird. Andere Standards, die verwendet werden können, sind beispielsweise DVB-SH (Rundfunkstandard zur Verarbeitung von Satellitensignalen für mobile Endgeräte), DMB (digital media broadcast), TDtv (basierend auf der TD-CDMA-Tehnologie), 1seg (basierend auf der japanischen ISDB-T-Technologie), DAB (digital audio broadcasting) und MediaFLO. Grundlegend ist beispielsweise auch die Verwendung des WiMAX-Standards geeignet, mittels dessen breitbandige Zugänge zum Beispiel zum Internet via Funknetz angeboten werden können.

Zusätzlich können unterschiedliche Fernsehnormen und Bildcodierungen verwendet werden, z.B. HDTV (hochaufgelöstes Fernsehsignal), SDTV (normal aufgelöstes Fernsehsignal), EDTV, MPEG-2, MPEG-4 und dergleichen. Diese Normen definieren das Wesen und die Codierung des Signals, das über die Antennen der Sendeeinheit an die Empfangsgeräte der unterschiedlichen Nutzer ausgestrahlt wird. Im Rahmen dieser Normen kann der Audio- und Videodatenstrom auch als ein separater Videodatenstrom und separater Audiodatenstrom erzeugt und in getrennter Weise durch die Sendeeinheit ausgestrahlt werden. Für die physikalische Ausstrahlung des Sendesignals werden dann der Audiodatenstrom und der Videodatenstrom separiert und entsprechend dem verwendeten Standard ausgestrahlt. Wesentlich ist hierbei, dass den Nutzern ein Bild- und Tonsignal an ihren Empfangsgeräten zur Verfügung gestellt wird, das dem von der Rendering-Einheit erzeugten Audio- und Videodatenstrom entspricht.

Die Rendering-Einheit der zentralen Steuereinheit erzeugt im Rahmen des Verfahrens in Echtzeit einen Audio- und Videodatenstrom, zur Generierung dessen in dem Datenbanksystem gespeicherte, vordefinierte Audio- und Videodatenelemente miteinander verknüpft werden. Das Datenbanksystem kann in diesem Rahmen als Audio- und Videodatenelemente beispielsweise eine Anzahl von einer 3D-Figur zugeordneten, vordefinierten Darstellungselementen enthalten, die zur Erzeugung des Audio- und Videodatenstroms miteinander verknüpft werden können. Die Darstellungselemente können die 3D-Figur beispielsweise in unterschiedlichen Posen darstellen, wobei durch Verknüpfung der einzelnen Posen ein die 3D-Figur abbildender, realistisch wirkender Bewegungsablauf geschaffen wird. Beispielsweise kann in dieser Form eine durch das Programm führende Moderatorfigur in automatischer und interaktiver Weise kreiert werden, wobei die Generierung und Zusammenstellung im Rahmen der Erzeugung des Audio- und Videodatenstroms durch die Rendering-Einheit der zentralen Steuereinheit erfolgt und über eine Sendeeinheit an die Empfangsgeräte der unterschiedlichen Nutzer ausgestrahlt wird. Die Empfangsgeräte der Nutzer werden somit weitestgehend von rechenintensiven Aufgaben zur Erzeugung des Audio- und Videodatenstroms entlastet. Den Empfangsgeräten wird vielmehr das fertige Rundfunkprogramm zur Verfügung gestellt, das durch die vorab an die Empfangsgeräte gesendeten Interaktionsmodule jedoch ergänzt und erweitert werden kann.

Im Rahmen der Verknüpfung werden die einzelne Szenen oder Posen einer 3D-Figur darstellenden Audio- und Videodatenelemente zu einem zusammenhängenden, filmartigen Datenstrom verknüpft, der die Rundfunksendung darstellt und ausgestrahlt werden kann. Die Verknüpfung berücksichtigt dabei logische Vorgaben sowie aus den Interaktionsnachrichten der Nutzer resultierende Parameter. Beispielsweise werden nur solche Posen einer 3D-Figur miteinander verknüpft, die logisch aufeinander folgen können, oder es werden nur solche Landschaftsszenen und -objekte miteinander kombiniert, die logisch zusammenpassen können. Die Interaktionen der Nutzer können eingehen, indem beispielsweise auf eine von den Nutzern per Interaktionsnachrichten vorgenommene Auswahl Posen gewählt werden, die eine Reaktion auf die Auswahl (Ärger, Freude etc.) zeigen. Die Verknüpfung bezieht somit auch Randbedingungen mit ein, die den emotionalen Ablauf der Rundfunksendung vorgeben.

In dem Datenbanksystem können eine Vielzahl von unterschiedlichen Audio- und Videodatenelementen gespeichert sein, die unterschiedliche Figuren, Szenarien, Bild- und Tonelemente darstellen und nach Themengebieten geordnet in dem Datenbanksystem abgelegt sein können. Das Datenbanksystem bietet somit einen weit reichenden Fundus von Elementen, aus denen in Echtzeit dann der Audio- und Videodatenstrom des Rundfunkprogramms generiert werden kann.

Das Datenbanksystem kann eine externe Schnittstelle aufweisen, über die vordefinierte Audio- und Videodatenelemente auf dem Datenbanksystem abgelegt und gespeichert werden können. Die Audio- und Videodatenelemente können somit extern kreiert und dann in dem Datenbanksystem abgelegt werden, um nachfolgend zur Erzeugung eines interaktiven Rundfunkprogramms verwendet zu werden. Gleichermaßen ist auch denkbar, dass Nutzer über die Telekommunikationsschnittstelle Audio- und Videodatenelemente an die zentrale Steuereinheit senden können, die diese nutzerdefinierten Audio- und Videodatenelemente verarbeitet und in dem Datenbanksystem zur weiteren Nutzung im Rahmen des Rundfunkprogramms speichert.

Die Aufgabe wird weiterhin durch ein System mit den Merkmalen des Anspruchs 17 gelöst.

Das System weist eine zentrale Steuereinheit auf, die zum Bereitstellen des interaktiven Rundfunkprogramms einen Audio- und Videodatenstrom generiert und den Audio- und Videodatenstrom einer Sendeeinheit zum Ausstrahlen an eine Mehrzahl von Empfangsgeräten unterschiedlicher Nutzer zur Verfügung stellt, wobei im Rahmen des interaktiven Rundfunkprogramms die Nutzer durch Abgabe von mindestens einer Interaktionsnachricht mit dem interaktiven Rundfunkprogramm interagieren. Erfindungsgemäß ist hierbei vorgesehen, dass die Steuereinheit
- eine Rendering-Einheit aufweist, die mit einem Datenbanksystem zur Generierung des Audio- und Videodatenstroms zusammenwirkt, wobei in dem Datenbanksystem vordefinierte Audio- und Videodatenelemente gespeichert sind, die von der Rendering-Einheit zu dem Audio- und Videodatenstrom verknüpft werden, und
- eine Telekommunikationsschnittstelle zum Erfassen der im Rahmen des interaktiven Rundfunkprogramms abgegebenen Interaktionsnachrichten aufweist, wobei die Rendering-Einheit ausgebildet ist, die Interaktionsnachrichten der Nutzer bei der Generierung des Audio- und Videodatenstroms zu berücksichtigen.

Das zur Verfügung gestellte System ist geeignet zur Durchführung des vorangehend geschilderten Verfahrens. Grundgedanke des Systems ist hierbei, dass eine zentrale Steuereinheit zur Verfügung gestellt wird, die einerseits durch Verknüpfung vordefinierter Audio- und Videodatenelemente aus einem Datenbanksystem einen Audio- und Videodatenstrom in Echtzeit generiert und als interaktives Rundfunkprogramm ausstrahlt und andererseits einen Rückkanal in Form einer Telekommunikationsschnittstelle aufweist, die Antworten unterschiedlicher Nutzer in Form von Interaktionsnachrichten empfängt und verarbeitet und im Zusammenwirken mit der Rendering-Einheit zur weiteren Erzeugung des Audio- und Videodatenstroms und somit des interaktiven Rundfunkprogramms berücksichtigt. Es wird somit ein universelles System zur automatischen Generierung von interaktiven Rundfunkprogrammen geschaffen, das auf kostengünstige Weise auch qualitativ hochwertige Programmformate erzeugen kann. Auf diese Weise können beispielsweise Programmformate in Form von Abendteuerspielen generiert werden, an denen gleichzeitig eine Vielzahl von Nutzern teilnehmen können, wobei die Nutzer gemeinsam den Programmablauf beeinflussen und gleichzeitig in kompetitiver Weise gegeneinander antreten können.

Der der Erfindung zugrunde liegende Gedanke soll nachfolgend anhand der in den Figuren dargestellten Ausführungsbeispiele näher erläutert werden. Es zeigen:
- Fig. 1: eine schematische Übersichtsdarstellung eines Systems zum Bereitstellen eines interaktiven Rundfunkprogramms;
- Fig. 2: eine schematische Darstellung der Ausstrahlung des interaktiven Rundfunkprogramms an eine Vielzahl von Nutzern;
- Fig. 3a: eine schematische Darstellung des ausgesandten Audio- und Videodatenstroms;
- Fig. 3b: eine schematische Darstellung des Audio- und Videodatenstroms, verknüpft mit einem Interaktionsmodul, und
- Fig. 3c: eine schematische Darstellung der Übersendung einer Interaktionsnachricht von dem Nutzer an die zentrale Steuereinheit.

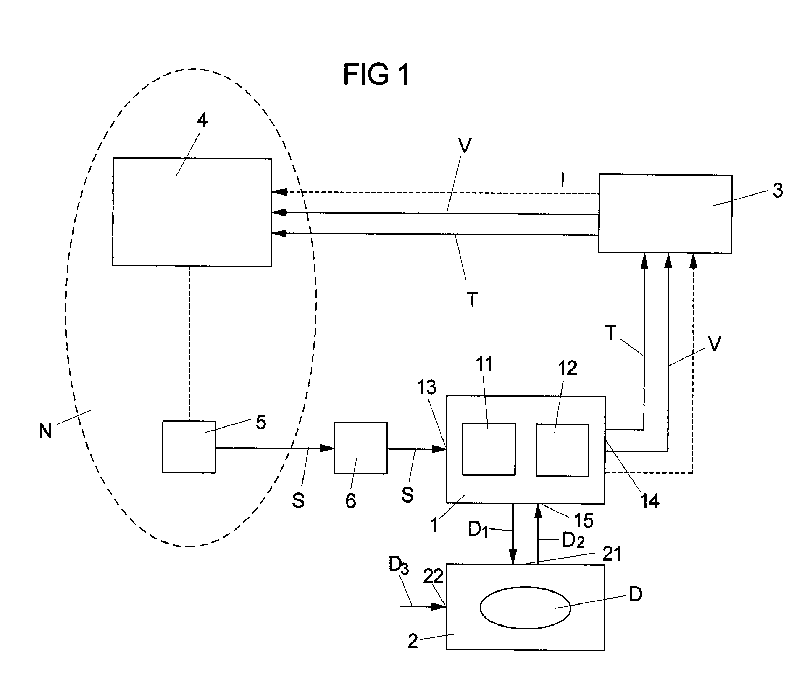

Fig. 1 zeigt eine schematische Darstellung eines Systems zum Bereitstellen eines interaktiven Rundfunkprogramms, deren zentrales Element eine Steuereinheit 1 ist, die eine Auswerteeinheit 11 und eine Rendering-Einheit 12 aufweist und mit einem Datenbanksystem 2 zusammenwirkt.

In dem Datenbanksystem 2 sind eine Vielzahl von Audio- und Videodatenelementen D gespeichert, die unterschiedliche Figuren in unterschiedlichen Posen und unterschiedliche Szenarien darstellen können. Zudem können in dem Datenbanksystem 2 Filmabschnitte in Form von Sequenzen, Werbefilmchen oder Trailern abgelegt sein.

Zum Erzeugen eines interaktiven Rundfunkprogramms verknüpft die Rendering-Einheit 12 der zentralen Steuereinheit 1 unterschiedliche Audio- und Videodatenelemente D des Datenbanksystems 2 zu einem einheitlichen Audio- und Videodatenstrom V. Das Datenbanksystem 2 stellt hierbei über eine Schnittstelle 21 und einen Datenstrom D2 der Steuereinheit 1 über eine Schnittstelle 15 die Audio- und Videodatenelemente D zur Verfügung, die von der Rendering-Einheit 12 miteinander verknüpft und zu dem Audio- und Videodatenstrom V zusammengefügt werden. Die Rendering-Einheit 12 kann dem Audio- und Videodatenstrom V dabei in dem Datenbanksystem 2 gespeicherte Sequenzen in Form von Trailern oder Werbefilmchen beifügen, die als Bestandteil des Audio- und Videodatenstroms V von der Steuereinheit 1 an eine Sendeeinheit 3 übermittelt werden.

Der Audio- und Videodatenstrom V stellt ein Ton- und Bildsignal dar, das beispielsweise einem herkömmlichen Format eines Rundfunkprogramms entspricht, das jedoch automatisch aus den Audio- und Videodatenelementen D des Datenbanksystems 2 durch die Steuereinheit 1 generiert worden ist. Die Produktionskosten sind, bedingt durch die automatische Generierung, gering, wobei bei einer Vielzahl von zur Verfügung stehenden Audio- und Videodatenelementen D ein vielfältiges, abwechslungsreiches Programm geschaffen werden kann.

Die Rendering-Einheit 12 verknüpft die Audio- und Videodatenelemente D unter Berücksichtigung unterschiedlicher Informationen und Randbedingungen, die beispielsweise definieren, wie die einzelnen Audio- und Videodatenelemente D miteinander kombinierbar sind (beispielsweise welche Posen einer dargestellten Figur dynamisch aneinander anschließen können), welche Audio- und Videodatenelemente D wie oft und in welcher Kombination bisher bereits genutzt worden sind (beispielsweise welche Posen einer dargestellten Figur bereits in welcher Kombination wie häufig kombiniert worden sind) oder welches Kameramanagement zur Darstellung der abzubildenden Figur oder des abgebildeten Szenarios geeignet ist. Diese Informationen sind ebenfalls in dem Datenbanksystem 2 gespeichert. Die Rendering-Einheit 12 generiert den Audio- und Videodatenstrom V in Echtzeit und übermittelt diesen an die Sendeeinheit 3.

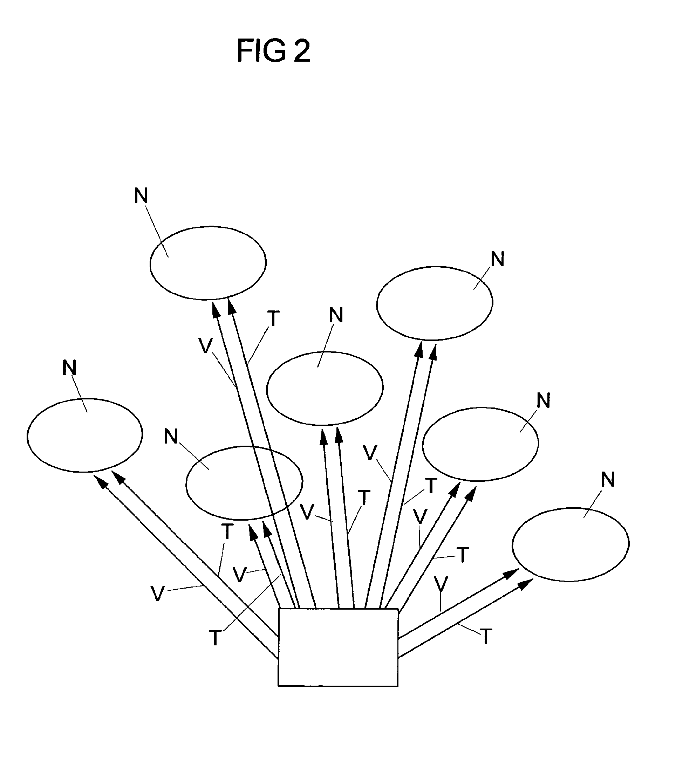

Die Sendeeinheit 3 strahlt den Audio- und Videodatenstrom V im Rahmen eines Rundfunkkanals an eine Vielzahl von Empfangsgeräten 4 unterschiedlicher Nutzer N aus. Dieses ist schematisch in Fig. 2 dargestellt. Grundlegend ist hierbei, dass die zentrale Sendeeinheit 3 ein einheitliches Programm in Form des Audio- und Videodatenstroms V gleichzeitig und breitbandig an eine Vielzahl von Nutzern N ausstrahlt, die den Audio- und Videodatenstrom V gleichzeitig empfangen. Beispiel hierfür ist ein herkömmlicher Fernsehkanal, in dessen Rahmen durch eine Sendestation ein Fernsehprogramm an eine Vielzahl von über jeweils einen Fernsehempfänger verfügenden Nutzern gesendet wird. Zum Ausstrahlen des Audio- und Videodatenstroms V kann beispielsweise der digital terrestrische DVB-T-Standard verwendet werden, mittels dessen digitale Sendesignale an digitale Fernsehempfänger gesandt werden. Ebenfalls denkbar ist, die Übertragung im DVB-H-Standard vorzunehmen, in dessen Rahmen auf digital terrestrische Weise Sendesignale an Mobilfunkendgeräte übersandt werden.

Wie in Fig. 1 dargestellt, empfängt ein Nutzer N den Audio- und Videodatenstrom V über das Empfangsgerät 4, beispielsweise einen Fernsehempfänger. Zusätzlich zu dem Audio- und Videodatenstrom V generiert die Rendering-Einheit 12 der Steuereinheit 1 auch einen so genannten Meta-Datenstrom T, der zeitgleich mit dem Audio- und Videodatenstrom V über die Sendeeinheit 3 an das Empfangsgerät 4 des Nutzers N übersandt wird. Mit dem Meta-Datenstrom T werden so genannte Meta-Daten an den Nutzer N ausgestrahlt, in deren Rahmen Steuerbefehle von der Steuereinheit 1 an das Empfangsgerät 4 des Nutzers N übertragen werden. Zu diesen Steuerbefehlen des Meta-Datenstroms T gehören beispielsweise eine Identifikationsnummer eines Interaktionsmoduls, das vorab bereits im Rahmen von Interaktionsmoduldaten I an das Empfangsgerät 4 des Nutzers N übertragen worden ist und auf dem Empfangsgerät 4 gespeichert ist, ein Ausführbefehl für das Interaktionsmodul und / oder eine Zeitangabe, zu welchem Zeitpunkt das Interaktionsmodul auf dem Empfangsgerät 4 ausgeführt werden soll. Der Meta-Datenstrom T dient insbesondere zur Synchronisation der Ausführung der Interaktionsmodule auf dem Empfangsgerät 4 mit dem Audio- und Videodatenstrom V.

Interaktionsmodule in diesem Zusammenhang stellen Module dar, die wiederholt als Teil des ausgestrahlten Rundfunkprogramms durch das Empfangsgerät 4 abgespielt werden sollen und beispielsweise Abstimmmodule, Module zur Vornahme bestimmter Handlungen, Quizmodule oder dergleichen sein können. Die Interaktionsmodule werden vorab als Interaktionsmoduldaten I von der Sendeeinheit 3 an das Empfangsgerät 4 gesendet, im Empfangsgerät 4 gespeichert und dann, aktiviert durch den Meta-Datenstrom T, zu einem bestimmten Zeitpunkt synchron mit dem Audio- und Videodatenstrom V ausgeführt. Die Interaktionsmodule können beispielsweise in Form von Masken vorliegen, die eine graphische Oberfläche beispielsweise eines Abstimmmoduls definieren und in die über die Meta-Daten zusätzliche Daten eingeschrieben werden.

Durch ein Interaktionsmodul wird der Nutzer N aufgefordert, in bestimmter Weise mit dem generierten und übertragenen interaktiven Rundfunkprogramm zu interagieren. Beispielsweise wird der Nutzer N aufgefordert, eine bestimmte Telefonnummer anzurufen und eine Antwort auf eine bestimmte Frage zu übermitteln. Ebenso ist denkbar, dass der Nutzer N aufgefordert wird, eine Kurznachricht in Form einer so genannten SMS an eine bestimmte Rufnummer zu senden und in dieser Kurznachricht eine bestimmte Antwort zu übermitteln. Der Nutzer N kann hierzu ein Telekommunikationsendgerät 5 in Form eines Telefons, eines Mobilfunkendgeräts oder eines Computers verwenden, wobei auch denkbar ist, dass das Empfangsgerät 4 und das Telekommunikationsendgerät 5 ineinander integriert sind und der Nutzer N beispielsweise bei einem tastsensitiven Bildschirm unmittelbar über den das interaktive Rundfunkprogramm abbildenden Bildschirm eine Interaktionsnachricht erzeugen und versenden kann. Dieses ist insbesondere denkbar im Zusammenhang mit der Übertragung des interaktiven Rundfunkprogramms an mobile Endgeräte über den DVB-H-Standard, in welchem Fall das Empfangsgerät 4 und das Telekommunikationsendgerät 5 durch dasselbe Mobilfunkgerät verwirklicht sind.

Der Nutzer N wird durch das interaktive Rundfunkprogramm insbesondere über ein Interaktionsmodul zu einer Interaktion aufgefordert und erzeugt mittels des Telekommunikationsendgeräts 5 eine Interaktionsnachricht S beispielsweise in Form eines Anrufs oder einer Kurznachricht, die er an einen Telekommunikationsnetzbetreiber 6 übersendet. Der Telekommunikationsnetzbetreiber 6 verarbeitet die eingehende Interaktionsnachricht S, rechnet diese ab und übermittelt sie an die Steuereinheit 1. Über das Telekommunikationsendgerät 5 und den Telekommunikationsnetzbetreiber 6 wird somit ein Rückkanal zur Steuereinheit 1 zur Verfügung gestellt, der die interaktive Rückwirkung des Nutzers N auf die Steuereinheit 1 und das in der Steuereinheit 1 generierte interaktive Rundfunkprogramm ermöglicht.

Die Verarbeitung der Interaktionsnachrichten S der unterschiedlichen Nutzer N auf Seiten der Steuereinheit 1 wird durch die Auswerteeinheit 11 übernommen, die die Interaktionnachrichten S der Nutzer N erhält, auswertet und das Auswerteergebnis an die Rendering-Einheit 12 übermittelt. Denkbar ist beispielsweise, das in Abhängigkeit vom Auswerteergebnis die Rendering-Einheit 12 die weitere Erzeugung des Audio- und Videodatenstroms V vornimmt. Beispielsweise ist denkbar, dass im Rahmen eines interaktiven Rundfunkprogramms den Nutzern N Möglichkeiten für den weiteren Verlauf des interaktiven Rundfunkprogramms vorgegeben werden (z. B. "Betreten der Insel", "Verlassen der Höhle", "Öffnen der Tür" oder dergleichen) und abhängig von der Mehrheitsentscheidung der Nutzer N das Rundfunkprogramm dann fortgeführt wird. Auf diese Weise lassen sich interaktiv beispielsweise Abenteuerspielformate generieren, an denen eine Vielzahl von Nutzern N teilnehmen können. Gleichzeitig ist denkbar, dass die Antworten in Form der Interaktionsnachrichten S der einzelnen Nutzer N getrennt durch die Auswerteeinheit 11 bewertet werden, so dass das interaktive Rundfunkprogramm auch eine kompetitive Komponente erhält, in deren Rahmen eine vergleichende Bewertung der einzelnen Nutzer N stattfindet. Beispielweise kann in diesem Rahmen die Richtigkeit der Antworten in den Interaktionsnachrichten S der einzelnen Nutzer N bewertet werden und den Nutzern N so ein Bewertungsergebnis zugeordnet werden. Gleichzeitig ist auch denkbar, dass beispielsweise die Zeit zur Abgabe der Antwort durch die Nutzer N berücksichtigt wird und in die Bewertung eines Nutzers N einfließt.

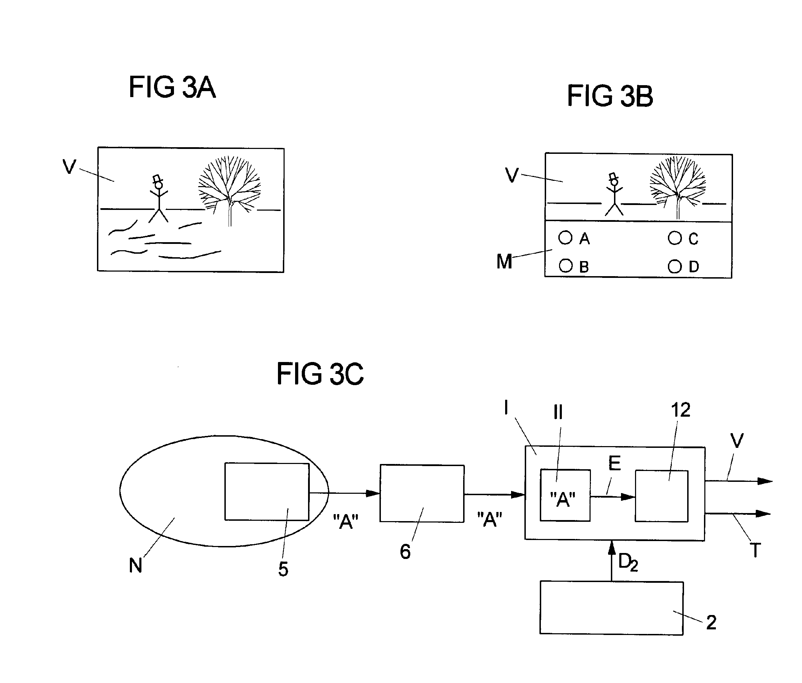

Ein Beispiel für einen Programmablauf ist in Fig. 3a bis 3c dargestellt. Zunächst wird einem Nutzer ein Audi- und Videodatenstrom V übertragen und auf dem Empfangsgerät 4 des Nutzers N dargestellt. Dieses ist in Fig. 3a schematisch veranschaulicht. Die einzelnen Elemente des Audio- und Videodatenstroms V sind hierbei aus den Audio- und Videodatenelementen D des Datenbanksystems 2 zusammengesetzt und in Echtzeit von der Rendering-Einheit 12 generiert worden.

Aktiviert durch einen Ausführbefehl im Rahmen des Meta-Datenstroms T wird ein Interaktionsmodul M am Empfangsgerät 4 ausgeführt. Dieses ist in Fig. 3b schematisch dargestellt. Bei dem Interaktionsmodul M kann es sich beispielsweise um ein Abstimmmodul handeln, das die Nutzer N auffordert, eine der Antworten "A", "B", "C" oder "D" auszuwählen. Gleichzeitig kann dem Nutzer N mitgeteilt werden, die Antwort beispielsweise über eine SMS an eine bestimmte Rufnummer zu senden.

Der Nutzer N, aufgefordert durch das Interaktionsmodul M, erzeugt somit eine Interaktionsnachricht S beispielsweise in Form einer SMS und sendet diese über das Telekommunikationsendgerät 5 an einen Telekommunikationsnetzbetreiber 6. Wie in Fig. 3c veranschaulicht, wählt der Nutzer N beispielsweise die Antwort "A" aus und sendet diese Antwort als SMS an den Telekommunikationsnetzbetreiber 6. Der Telekommunikationsnetzbetreiber 6 wertet die SMS aus, rechnet diese ab und übermittelt den Inhalt der Nachricht an die Steuereinheit 1. Die Auswerteeinheit 11 der Steuereinheit 1 erfasst den Inhalt, bewertet diesen und erzeugt ein Auswerteergebnis E, das an die Rendering-Einheit 12 übermittelt wird. Abhängig vom Auswerteergebnis E kann dann beispielsweise der weitere Audio- und Videodatenstrom V generiert und das interaktive Rundfunkprogramm fortgeführt werden.

Die Rendering-Einheit 12 generiert aus in dem Datenbanksystem 2 gespeicherten, vordefinierten Audio- und Videodatenelementen den Audio- und Videodatenstrom V. Das Datenbanksystem 2 verfügt hierbei über eine externe Schnittstelle 22, über die im Rahmen eines Datenstroms D3 extern generierte Audio- und Videodatenelemente in das Datenbanksystem 2 eingepflegt werden können. Über die externe Schnittstelle 22 ist der Inhalt des Datenbanksystems 2 somit ständig erweiterbar, so dass neue Audio- und Videodatenelemente D den bestehenden Audio- und Videodatenelementen D hinzugefügt oder bestehende Audio- und Videodatenelemente D ersetzt werden können. In dem Datenbanksystem 2 können die Audio- und Videodatenelemente nach Themengebieten sortiert sein, wobei zusätzlich Informationen abgelegt sein können, welche Audio- und Videodatenelemente D mit welchen Audio- und Videoelementen D verknüpfbar sind. Diese Informationen können dann von der Rendering-Einheit 12 verwendet und zur Erzeugung des Audio- und Videodatenstroms V ausgenutzt werden. Über den Datenstrom D1 können zudem Audio- und Videodatenelemente, die von einen Nutzer N generiert und an die Steuereinheit 1 übersandt worden sind, sowie einem Nutzer N zugeordnete Informationen in dem Datenbanksystem 2 gespeichert werden.

Das vorgestellte System stellt eine hybride Plattform dar, die den terrestrischen Rundfunk als Sendekanal mit Telekommunikationskanälen als Rückkopplung kombiniert. Die ausgestrahlten Inhalte werden dabei automatisch generiert und beziehen interaktiv Antworten der Nutzer N mit ein, so dass auf kostengünstige Weise komplexe und ansprechende interaktive Rundfunkprogramme geschaffen werden können, die zudem eine Abrechnung der teilnehmenden Nutzer N ermöglichen. Auf diese Weise können beispielsweise hochwertige Spiele kostengünstig an eine Vielzahl von Nutzern breitbandig und somit mit hoher Bild- und Tonqualität übertragen werden. Die Generierung des interaktiven Rundfunkprogramms erfolgt zentral durch die zentrale Steuereinheit 1, so dass die Empfangsgeräte 4 der einzelnen Nutzer N weitestgehend von rechenaufwendigen Aufgaben entlastet sind.

Grundlegend ist im Rahmen der Erzeugung des interaktiven Rundfunkprogramms ein Sendungsschema vordefiniert, anhand dessen die Steuereinheit 1 dann die Sendung, i.e. den Audio- und Videodatenstrom V, in deterministischer Weise erzeugt. Beispielsweise kann als Schema ein Abenteuerspiel vorgegeben und in seinen Grundzügen, seinem Ablauf, seinem möglichen Verzweigungen vordefiniert sein. Die Steuereinheit 1 erzeugt dann anhand dieses vorgegebenen Schemas die inhaltliche Rundfunksendung, wobei abhängig von den Interaktionen der Nutzer N die Sendung fortgeführt und unterschiedliche Verzweigungen annehmen kann.

Anstelle der Vorgabe eines Schemas oder zusätzlich kann auch ein Zufallsgenerator vorgesehen und implementiert sein, der in zufälliger Weise einen Spiel- oder Sendungsablauf in Echtzeit aus den ihm zur Verfügung stehenden Audio- und Videodatenelementen generiert. Der Zufallsgenerator wählt dann, ohne dass vorher ein Schema einer Sendung definiert und vorgegeben sein muss, Inhalte aus, fügt diese zusammen und generiert so eine eigene Spielidee. Beispielsweise können in diesem Rahmen eine Reihe von Einzelspielen in zufälliger Weise aneinander gereiht und zu einer abwechslungsreichen Spielsendung kombiniert werden.

Der der Erfindung zugrunde liegende Gedanke ist nicht auf die vorangehend beschriebenen Ausführungsbeispiele beschränkt. Insbesondere ist die Anwendung des zur Verfügung gestellten Verfahrens und des Systems nicht auf die Verwendung des DVB-T- oder DVB-H-Standards beschränkt, sondern lässt sich auch mit anderen Standards zur breitbandigen Übertragung von Rundfunksignalen kombinieren. Wesentlich ist hierbei, dass in breitbandiger Weise eine Sendeeinheit ein Rundfunkprogramm an eine Vielzahl von Nutzern aussendet und über einen Telekommunikationskanal ein Rückkanal zur Verfügung gestellt wird, so dass die Nutzer in interaktiver Weise an dem generierten Rundfunkprogramm teilnehmen können.

### Bezugszeichenliste

- 1: Steuereinheit
- 11: Auswerteeinheit
- 12: Rendering-Einheit
- 13: Telekommunikationsschnittstelle
- 14, 15: Schnittstelle
- 2: Datenbanksystem
- 21, 22: Schnittstelle
- 3: Sendeeinheit
- 4: Empfangsgerät
- 5: Telekommunikationsendgerät
- 6: Telekommunikationsnetzbetreiber
- D: Audio- und Videodatenelemente
- D1, D2, D3: Audio- und Videodatenelemente
- E: Auswerteergebnis
- I: Interaktionsmoduldaten
- M: Interaktionsmodul
- N: Nutzer
- S: Interaktionsnachricht
- T: Meta-Datenstrom
- V: Audio- und Videodatenstrom

## Patentansprüche

1. Verfahren zum Bereitstellen eines interaktiven Rundfunkprogramms, bei dem
- zum Bereitstellen des interaktiven Rundfunkprogramms ein Audio- und Videodatenstrom generiert wird,
- der Audio- und Videodatenstrom an eine Mehrzahl von Empfangsgeräten unterschiedlicher Nutzer ausgestrahlt wird und
- die Nutzer im Rahmen des interaktiven Rundfunkprogramms durch Abgabe mindestens einer Interaktionsnachricht mit dem interaktiven Rundfunkprogramm interagieren,
**dadurch gekennzeichnet,**
**dass** eine zentrale Steuereinheit (1) den Audio- und Videodatenstrom (V) mittels einer Rendering-Einheit (12) generiert, wobei
- die Rendering-Einheit (12) mit einem Datenbanksystem (2) zur Generierung des Audio- und Videodatenstroms (V) zusammenwirkt, indem die Rendering-Einheit (12) in dem Datenbanksystem (2) gespeicherte, vordefinierte Audio- und Videodatenelemente (D) zu dem Audio- und Videodatenstrom (V) verknüpft, und
- die Rendering-Einheit (12) die mindestens eine Interaktionsnachricht (S) bei der Generierung des Audio- und Videodatenstroms (V) berücksichtigt.

2. Verfahren nach Anspruch 1, **dadurch gekennzeichnet, dass** die zentrale Steuereinheit (1) eine Telekommunikationsschnittstelle (13) zur Erfassung der Interaktionsnachrichten (S) der Nutzer (N) aufweist.

3. Verfahren nach Anspruch 1 oder 2, **dadurch gekennzeichnet, dass** ein Nutzer (N) durch Versenden einer Interaktionsnachricht (S) in Form eines Anrufs oder einer SMS über ein Telekommunikationsendgerät (5) mit dem interaktiven Rundfunkprogramm interagiert.

4. Verfahren nach Anspruch 3, **dadurch gekennzeichnet, dass** die Interaktionsnachricht (S) von einem Telekommunikationsnetzbetreiber (6) empfangen, verarbeitet und an eine Telekommunikationsschnittstelle (13) der Steuereinheit (1) weitergeleitet wird.

5. Verfahren nach einem der vorangehenden Ansprüche, **dadurch gekennzeichnet, dass** die Interaktionsnachricht (S) durch eine Auswerteeinheit (11) der Steuereinheit (1) ausgewertet wird.

6. Verfahren nach Anspruch 5, **dadurch gekennzeichnet, dass** in Abhängigkeit von einem durch die Auswerteinheit (11) ermittelten Auswerteergebnis (E) die Rendering-Einheit (12) den Audio- und Videodatenstrom (V) weiter erzeugt.

7. Verfahren nach Anspruch 5 oder 6, **dadurch gekennzeichnet, dass** die Interaktionsnachrichten (S) unterschiedlicher Nutzer (N) getrennt voneinander ausgewertet und bewertet werden und in Abhängigkeit von der Auswertung jedem Nutzer (N) ein Ergebnis zugeordnet wird.

8. Verfahren nach einem der vorangehenden Ansprüche, **dadurch gekennzeichnet, dass** vor oder während der Ausstrahlung des Audio- und Videodatenstroms (V) Interaktionsmoduldaten (I) an die Empfangsgeräte (4) der Nutzer (N) übertragen werden, die mindestens ein Interaktionsmodul (M) für eine Interaktion der Nutzer (N) mit dem ausgestrahlten Rundfunkprogramm definieren.

9. Verfahren nach Anspruch 8, **dadurch gekennzeichnet, dass** mittels des Interaktionsmoduls (M) die Nutzer (N) zu einer Interaktion aufgefordert werden.

10. Verfahren nach Anspruch 8 oder 9, **dadurch gekennzeichnet, dass** die Interaktionsmoduldaten (1) wiederholt übertragen werden.

11. Verfahren nach einem der vorangehenden Ansprüche, **dadurch gekennzeichnet, dass** die Rendering-Einheit (12) zusätzlich zu dem Audio- und Videodatenstrom (V) einen Meta-Datenstrom (T) erzeugt, der mindestens einen Steuerbefehl zum Ausführen mindestens eines Interaktionsmoduls (M) auf den Empfangsgeräten (4) der Nutzer (N) enthält und zusammen mit dem Audio- und Videodatenstrom (V) ausgestrahlt wird.

12. Verfahren nach einem der vorangehenden Ansprüche, **dadurch gekennzeichnet, dass** zum Ausstrahlen des Audio- und Videodatenstroms (V) der DVB-T-Standard verwendet wird.

13. Verfahren nach einem der vorangehenden Ansprüche, **dadurch gekennzeichnet, dass** zum Ausstrahlen des Audio- und Videodatenstroms (V) der DVB-H-Standard verwendet wird.

14. Verfahren nach einem der vorangehenden Ansprüche, **dadurch gekennzeichnet, dass** in dem Datenbanksystem (2) als Audio- und Videodatenelemente (D) eine Anzahl von einer 3D-Figur zugeordneten, vordefinierten Darstellungselementen gespeichert sind, die zur Erzeugung des Audio- und Videodatenstroms miteinander verknüpfbar sind.

15. Verfahren nach einem der vorangehenden Ansprüche, **dadurch gekennzeichnet, dass** in dem Datenbanksystem (2) die Audio- und Videodatenelemente (D) nach Themengebieten geordnet sind.

16. Verfahren nach einem der vorangehenden Ansprüche, **dadurch gekennzeichnet, dass** das Datenbanksystem (2) eine externe Schnittstelle (22) aufweist, über die vordefinierte Audio- und Videodatenelemente (D) auf dem Datenbanksystem (2) abgelegt werden.

17. System zum Bereitstellen eines interaktiven Rundfunkprogramms, mit einer zentralen Steuereinheit, die zum Bereitstellen des interaktiven Rundfunkprogramms einen Audio- und Videodatenstrom generiert und den Audio- und Videodatenstrom einer Sendeeinheit zum Ausstrahlen an eine Mehrzahl von Empfangsgeräten unterschiedlicher Nutzer zur Verfügung stellt, wobei im Rahmen des interaktiven Rundfunkprogramms die Nutzer durch Abgabe von mindestens einer Interaktionsnachricht mit dem interaktiven Rundfunkprogramm interagieren,
**dadurch gekennzeichnet,**
**dass** die Steuereinheit (1)
- eine Rendering-Einheit (12) aufweist, die mit einem Datenbanksystem (2) zur Generierung des Audio- und Videodatenstroms (V) zusammenwirkt, wobei in dem Datenbanksystem (2) vordefinierte Audio- und Videodatenelemente (D) gespeichert sind, die von der Rendering-Einheit (12) zu dem Audio- und Videodatenstrom (V) verknüpft werden, und
- eine Telekommunikationsschnittstelle (13) zum Erfassen der im Rahmen des interaktiven Rundfunkprogramms abgegebenen Interaktionsnachrichten (S) aufweist, wobei die Rendering-Einheit (12) ausgebildet ist, die Interaktionsnachrichten (S) der Nutzer (N) bei der Generierung des Audio- und Videodatenstroms zu berücksichtigen.
